# EUROPÄISCHE PATENTSCHRIFT

(11) **EP 1 054 252 B1**
(45) Veröffentlichungstag und Bekanntmachung des Hinweises auf die Patenterteilung: **19.02.2003**
(21) Anmeldenummer: 00890151.4
(22) Anmeldetag: 11.05.2000
(51) Int. Cl.: G01N 21/53

(54) **Optische Messanordnung zur Bestimmung der Transmissions- und Streustrahlung**
Optical measuring device for the determination of transmitted and scattered radiation
Dispositif de mesure optique pour déterminer le rayonnement transmis et diffusé

(30) Priorität: 20.05.1999 AT 90099
(43) Veröffentlichungstag der Anmeldung: 22.11.2000
(73) Patentinhaber: F.HOFFMANN-LA ROCHE AG, 4070 Basel (CH)
(72) Erfinder: Ziegler, Werner, Dipl.-Ing., 8043 Graz (AT); Jöbstl, Ewald, 8052 Graz (AT); Strohmeier, Manfred, 8010 Graz (AT)
(74) Vertreter: Babeluk, Michael, Dipl.-Ing. Mag.

(56) Entgegenhaltungen:
- WO-A-99/44043
- DE-A- 2 625 088
- US-A- 5 828 458

## Beschreibung

Die Erfindung betrifft eine optische Messanordnung zur Bestimmung der Transmissions- und der Streustrahlung einer mit einer Messstrahlung beaufschlagten flüssigen Probe, mit
- einer Kapillare zur Aufnahme der flüssigen Probe,
- einer Lichtquelle zur Emission der Messstrahlung im Wesentlichen senkrecht auf die Längsachse der Kapillare,
- einem ersten Detektor zur Erfassung der Transmissionsstrahlung, welcher im Bereich der Achse der Messstrahlung angeordnet ist,
- sowie einem in Richtung der Längsachse der Kapillare mit einem Abstand vom ersten Detektor angeordneten zweiten Detektor zur Erfassung der Streustrahlung, wobei der erste Detektor und der zweite Detektor auf unterschiedlichen Seiten einer Ebene liegen, welche die Längsachse der Kapillare enthält und auf die Achse der Messstrahlung senkrecht steht.

Derartige Messanordnungen werden vor allem für die Untersuchung flüssiger Medien verwendet, welche absorbierende Streukörper beinhalten. Es sind dies z.B. Vollblutproben, andere organische oder anorganische Flüssigkeiten, aber auch flüssige Proben in der Umwelttechnologie, wie z.B. Abwasserproben.

Zur Bestimmung der Konzentration der Inhaltsstoffe derartiger Flüssigkeiten können Absorptionsmessungen bei unterschiedlichen Wellenlängen in einer Transmissions- bzw. Durchlichtgeometrie und in einer Streulichtgeometrie durchgeführt werden, wobei aus den gemessenen Transmissions- und Streulichtintensitäten unter Zuhilfenahme von Kalibrierdaten bekannter Proben und der Kenntnis der Leerwerte (Messwerte bei mit reinem Wasser gefüllter Kapillare) die Inhaltsstoffe bestimmt werden können.

So ist beispielsweise aus der EP 0 800 074 A1 eine Vorrichtung zur Bestimmung der Konzentration von Hämoglobinderivaten in einer unverdünnten unhämolisierten Vollblutprobe bekannt geworden. Die Vollblutprobe wird in einer Küvette mit der Messstrahlung beaufschlagt, welche zumindest n monochromatische, schmalbandige Strahlungsanteile unterschiedlicher Wellenlänge aufweist. Eine erste Detektionseinrichtung ist in Transmissionsgeometrie auf der Achse des Primärstrahles angeordnet. Der Detektor weist eine relativ kleine Strahleintrittsfläche auf und misst im wesentlichen Strahlung aus dem Zentralstrahl. In einer zweiten Messposition in einem bestimmten Winkel zur Achse des Primärstrahles ist eine zweite Detektionseinrichtung zur Erfassung der Streustrahlung angeordnet. Beide Detektoren stehen über Signalleitungen mit einer Auswerteeinrichtung in Verbindung, mit welcher die Hämoglobinderivate mittels einer abgespeicherten Kalibriermatrix berechnet werden.

Aus der EP 0 720 013 A2 ist ein Verfahren und eine Vorrichtung zur optischen Bestimmung von Blutparametern bekannt geworden, wobei eine Ausführungsvariante eine in einem Gehäuse angeordnete Durchflusszelle zeigt, welche die Blutprobe aufnimmt. Senkrecht auf die Achse der Durchflusszelle wird eine Messstrahlung aus einer Lichtquelle eingekoppelt, wobei auf der anderen Seite der Messzelle ein erster Detektor in einer Durchlichtgeometrie und weitere Detektoren in unterschiedlichem Abstand vom ersten Detektor jeweils in einer Streullchtgeometrie angeordnet sind. Die Messzelle der beschriebenen Anordnung kann direkt an den extrakorporalen Blutkreislauf angeschlossen und zur Optimierung der Dialyse verwendet werden.

Weiters ist aus der US 4,745,279 A eine Vorrichtung zur Hämatokrit-Messung In Blut bekannt geworden, bei welcher Infrarotstrahlung in eine transparente Küvette, durch welche das Blut geführt wird, eingestrahlt wird. Ein erster, am Boden der Küvette angeordneter Detektor empfängt diffus gestreutes Licht aus der Probe, welches ein Maß für die Sauerstoffsättigung darstellt. Ein zweiter, an einer Seitenfläche der Küvette angeordneter Detektor dient zur Hämatokrit-Messung. Das Anregungslicht für beide Detektoren wird durch zwei unterschiedliche Lichtquellen (LEDs) zur Verfügung gestellt, welche jeweils paarweise im Bereich der Detektoren angeordnet sind. Eine dritte Lichtquelle, welche die Probe nicht beaufschlagt, dient mit einem weiteren Detektor zur Erzeugung eines Referenzsignals.

Aus der EP 0 575 712 A2 ist eine Messanordnung bekannt, mit welcher direkt invitro oder in einer extrakorporalen Blutzirkulation gleichzeitig der Hämatokritwert und eine weitere Größe, beispielsweise die Natriumkonzentration bestimmt werden kann. Der kollimierte Messstrahl aus einer Lichtquelle trifft dabei senkrecht auf eine von der Blutprobe durchflossene Messkammer, welche in einem Gehäuse angeordnet ist. Zur Absorptionsmessung werden zwei Fotodetektoren verwendet, wobei der erste Detektor in Richtung des einfallenden Lichtes (Transmissionsstrahlung) und der zweite abseits von der zentralen Richtung (Streustrahlung) positioniert ist. Die vom zweiten Detektor erfassten Strahlungsanteile werden stark von der Natriumkonzentration beeinflusst, sodass deren quantitative Bestimmung möglich ist.

Da die Intensität der Transmissionsstrahlung weit größer (Faktor 100) als jene der Streustrahlung ist, kann bei den bekannten Messanordnungen eine nachteilige Beeinflussung des Streulichtdetektors durch die Messstrahlung nicht vermieden werden. Die Messstrahlung kann zumindest teilweise durch Streu- und Reflexionsprozesse außerhalb der Probe sowie zum Teil direkt in den Streulichtdetektor gelangen und dessen Messergebnis verfälschen.

Die DE 26 25 088 A1 beschreibt eine optoelektronische Vorrichtung zur Bestimmung der Transmissions- und der Streustrahlung einer mit einer Messstrahlung beaufschlagten in einer Küvette vorliegenden, flüssigen Probe, wobei die Achse der Messstrahlung im wesentlichen senkrecht auf die Achse der Küvette gerichtet ist, mit einem ersten Detektor zur Erfassung der Transmissionsstrahlung, welcher im Bereich der Achse der Messstrahlung angeordnet ist, sowie mit einem in Richtung der Rohrachse mit einem Abstand vom ersten Detektor angeordneten zweiten Detektor zur Erfassung der Streustrahlung. Ein Eintrittsfenster für das Streulicht befindet sich in einem drehbaren Lichtleitring und kann insbesondere so gedreht werden, dass die in Bezug auf eine gedachte Ebene, die die Längsachse der Küvette enthält und die senkrecht auf die Richtung der Messstrahlung steht, in den Rückwärtsbereich gesteuerte Strahlung gemessen wird.

Aufgabe der vorliegenden Erfindung ist es, eine Messanordnung der eingangs beschriebenen Art derart weiterzubilden, dass ein möglichst aussagekräftiges, von der Primärstrahlung unbeeinflusstes Messsignal beim Streulichtdetektor erfasst werden kann.

Diese Aufgabe wird erfindungsgemäß dadurch gelöst, dass die Anordnung einen Messblock mit einer Bohrung zur Aufnahme der Kapillare umfasst und dass zwischen einem Einkoppelbereich für die Messstrahlung und einem Auskoppelbereich für die Streustrahlung zumindest ein optisches Trennelement vorgesehen ist, welches einen Ringspalt zwischen der Kapillare und der Bohrung abdeckt. Damit wird verhindert, dass Teile der Messstrahlung durch Spiegelungen und Reflexionen bzw. Luftstreuung außerhalb der Kapillare in den Bereich des zweiten Detektors gelangen. Die Messung der Streustrahlung erfolgt in einer Rückstreuposition, sodass allein aufgrund der geometrischen Anordnung eine Beeinflussung des Streulichtdetektors durch die Messstrahlung weitgehend ausgeschlossen ist. Durch diese Maßnahme kann der Intensitätswert für die Leermessung (mit Wasser gefüllte Kapillare) sehr gering gehalten werden, sodass ein großer analytischer Messbereich zur Verfügung steht. Bei der eigentlichen Probenmessung tritt die Messstrahlung in Wechselwirkung mit den Streukörpern des Probenmediums, d.h. sie wird teilweise absorbiert und teilweise richtungsunabhängig gestreut. Ein Teil des Streulichtes breitet sich dabei in Richtung des zweiten Detektors (Streulichtdetektor) aus, ein Teil gelangt zur Wand bzw. in die Wand der Kapillare, welche als Lichtleitelement wirkt, und einen Teil dieser Strahlung wieder in die Probe einkoppelt, wodurch dieser Anteil für weitere Streuprozesse zur Verfügung steht. Durch diese Maßnahme kann sich die Messstrahlung entlang einer relativ langen Wechselwirkungszone in Richtung des Streulichtdetektors ausbreiten, wo sie als Streustrahlung durch den senkrecht zur Kapillarachse angeordneten zweiten Detektor registriert wird.

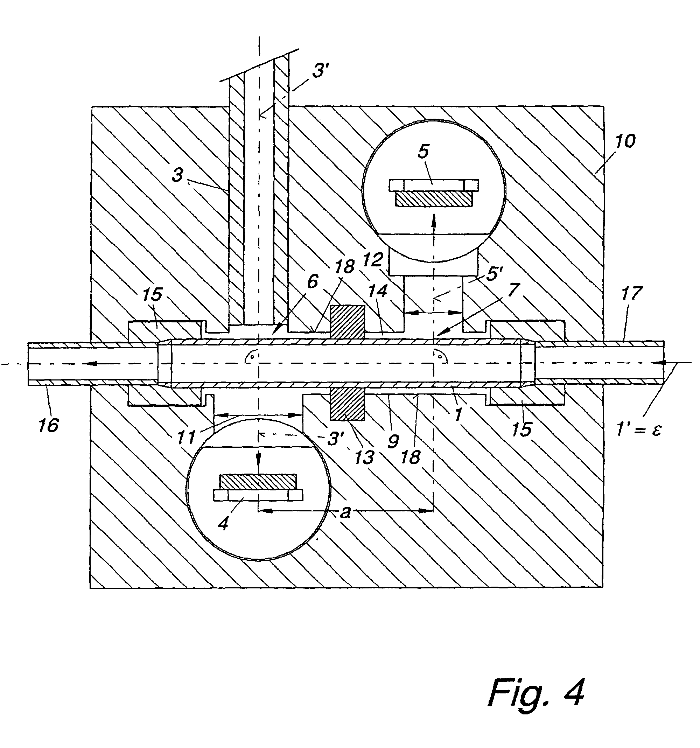

In einer bevorzugten Ausführungsvariante ist die optische Achse des zweiten Detektors zur Achse der Messstrahlung im Wesentlichen parallel angeordnet. Obwohl auch beträchtliche Abweichungen zur parallelen Anordnung (zirka ± 80°) brauchbare Messergebnisse liefern, solange der Streulichtdetektor in einer Rückstreugeometrie angeordnet ist, können naturgemäß die besten Ergebnisse in der 0°-Position erreicht werden (siehe Ausführungsvariante Fig. 4).

Besonders vorteilhaft ist es in diesem Zusammenhang, das optische Trennelement als O-Ring oder Quadring auszuführen, welcher die Kapillare in der Bohrung des Messbtockes zentriert.

Es hat sich weiters gezeigt, dass die Signalgüte beim Streulichtdetektor weiter erhöht werden kann, wenn die Bohrung des Messblockes zumindest zwischen dem Einkoppelbereich und dem Auskoppelbereich eine diffus reflektierende Oberfläche aufweist.

In einer weiteren vorteilhaften Ausführungsvariante der Erfindung ist vorgesehen, dass die Außenwand der Kapillare mit Ausnahme des Einkoppelbereiches für die Messstrahlung und des Auskoppelbereiches für die Streustrahlung verspiegelt ist, oder eine dichroitische Beschichtung aufweist.

Die Erfindung wird im folgenden anhand von zum Teil schematischen Zeichnungen näher erläutert.
- Fig. 1: zeigt eine schematische Darstellung der Messanordnung gemäß dem Oberbegriff des Hauptanspruchs zur Bestimmung der Transmissions- und der Streustrahlung einer flüssigen Proben,
- Fig. 2: ein Diagramm des Intensitätsverlaufes bei steigender Konzentration eines Probeninhaltsstoffes für den Transmissions- und den Streulichtdetektor der Messanordnung,
- Fig. 3: ein Diagramm, welches die Änderungen des Intensitätsverlaufes während der Messzeit zeigt,
- Fig. 4: eine bevorzugte Ausführungsvariante der Erfindung, sowie die
- Fig. 5: (Transmissionsstrahlung) und 6 (Streustrahlung) Diagramme über den Intensitätsverlauf bei steigender Konzentration eines Probeninhaltsstoffes.

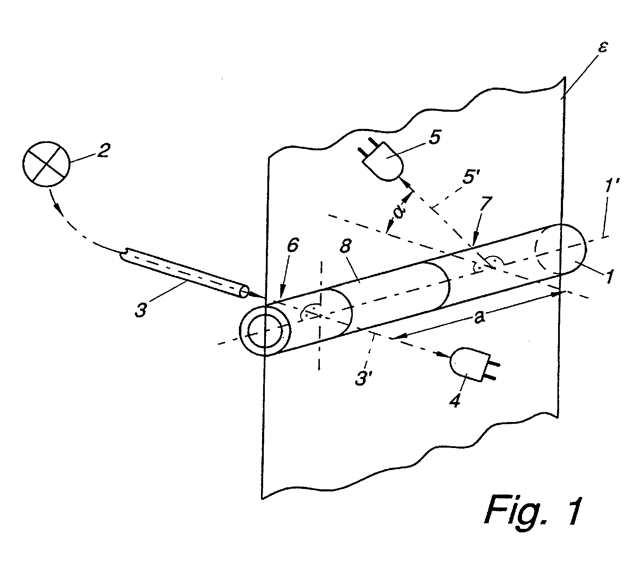

Die in Fig. 1 dargestellte optische Messanordnung weist eine Kapillare 1 mit einer Achse 1' auf, wobei die zu vermessende Probe im Inneren der Kapillare vorliegt, bzw. diese als Teil eines extrakorporalen Kreislaufes durchströmt. Die Messstrahlung wird ausgehend von einer Lichtquelle 2 beispielsweise über einen Lichtleiter 3 in die Kapillare 1 radial eingestrahlt, so daß die Achse 3' der Messstrahlung im wesentlichen senkrecht auf die Achse 1' der Kapillare 1 gerichtet ist. Auf der gegenüber liegenden Seite der Kapillare ist im Bereich der Achse 3' der Messstrahlung ein erster Detektor 4 zur Erfassung der Transmissionsstrahlung angeordnet. In einem Abstand a in Richtung der Kapillarachse 1' ist ein zweiter Detektor 5 zur Erfassung der Streustrahlung angeordnet, wobei der erste 4 und der zweite Detektor 5 auf unterschiedlichen Seiten einer Ebene ε liegen, welche die Kapillarachse 1' enthält und auf die Achse 3' der Messstrahlung normal steht. Die optische Achse 5' des zweiten Detektors 5 steht ebenfalls auf die Kapillarachse 1' im wesentlichen senkrecht, kann jedoch zur Achse 3' der Messstrahlung einen Winkel α aufweisen, welcher bis ±80° betragen kann. Bevorzugt sind allerdings Ausführungsvarianten, bei welchen die optische Achse 5' des zweiten Detektors 5 zur Achse 3' der Messstrahlung im wesentlichen parallel ausgerichtet ist.

Bei der in Fig. 1 dargestellten Ausführungsvariante weist die Außenwand der Kapillare 1 mit Ausnahme des Einkoppelbereiches 6 für die Messstrahlung und des Auskoppelbereiches 7 für die Streustrahlung eine Verspiegelung 8 oder eine dichroitische Beschichtung auf. Die Kapil-1are kann beispielsweise mit Aluminium bedampft werden, wobei in den Ein- und Auskoppelbereichen 6 und 7 ringförmige Bereiche von ca. 2mm Breite unverspiegelt bleiben.

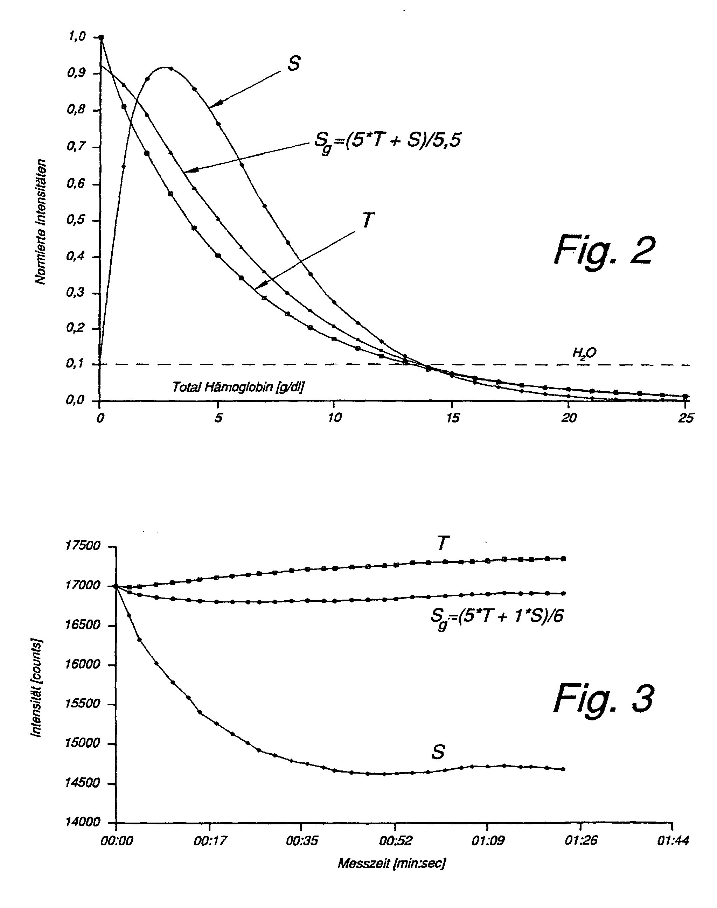

Bei der Messung wird die Messstrahlung in die Kapillare 1 unter rechtem Winkel bei definierter Apertur derart eingestrahlt, daß ein Überstrahlen der äußeren Kontur der Kapillare vermieden wird. Das Licht tritt in Wechselwirkung mit den absorbierenden Streukörpern der Probe, d.h. es wird teilweise absorbiert und teilweise richtungsunabhängig gestreut. Ein Teil der Messstrahlung gelangt auf direktem Wege zum Detektor 4, welcher die Transmissionsstrahlung erfaßt. Ein Teil des Streulichtes breitet sich in der Probe aus, wobei Strahlungsanteile, welche in die Wand der Kapillare 1 eintreten entweder mittels Totalreflexion (siehe Ausführungsvariante Fig. 3) oder aufgrund der Verspiegelung 8 der äußeren Oberfläche wieder in die Probe eintreten. Entlang der Strecke a bildet sich somit eine relativ lange Wechselwirkungszone aus, innerhalb welcher Mehrfachstreuungen möglich sind. Die Streustrahlung wird dann durch den ebenfalls zur Kapillarachse 1' senkrecht angeordneten Detektor 5 mit definierter Apertur detektiert.

In Fig. 2 sind die normierten Intensitätswerte T (Transmissionsdetektor 4) bzw. S (Streudetektor 5) in Abhängigkeit der Konzentration des streuenden Mediums in der Probe (beispielsweise der Hämoglobinkonzentration in Vollblut in g/dl) aufgetragen. Mit H₂O ist der Leerwert der Messanordnung bei mit Wasser gefüllter Kapillare gekennzeichnet, mit S_{g} ein gewichtetes Summensignal der Intensitätswerte T und S.

Der Transmissionsdetektor 4 liefert einen von der Konzentration abhängigen Signalverlauf, der ähnlich dem Lambert Beer'schen Gesetz eine stetige, monoton fallende Messkurve T ergibt. Der Streudetektor 5 hingegen liefert eine Messkurve S, die aus der Überlagerung von diffuser Lichtstreuung und Absorption resultiert. Bei steigender Konzentration der Probeninhaltsstoffe steigt der Intensitätswert rasch zu einem Maximum bei ca. 2-3 g/dl an und fällt dann kontinuierlich mit steigender Konzentration ab.

Eine Vielzahl von Proben weisen die messtechnisch unangenehme Eigenschaft auf, daß die Streukörper während der Messzeit abzusinken beginnen, falls die Probe nicht ausreichend bewegt werden kann. Dieser Effekt bedingt eine Drift der detektierten Signale und kann zu Fehlmessungen führen.

Die erfindungsgemäße Anordnung ist besonders geeignet, dieses Problem messtechnisch in den Griff zu bekommen.

Tritt eine Sedimentation der Streukörper ein, so wird die Konzentration der Probe über den Querschnitt der Kapillare betrachtet inhomogen. Für das Signal T des Transmissionsdetektors bedeutet das, daß die gemessene Intensität zunimmt, weil durch die Entmischung und die nichtlineare Kennlinie die mittlere Absorption abnimmt.

Im Gegensatz dazu nimmt im Streukanal das Messsignal ab weil im "dünneren" Teil der Probe weniger Streukörper vorhanden sind und im "dichteren" Teil die Absorption zunimmt.

Werden nun beide Signale, das vom Streudetektor und das vom Transmissionsdetektor, in geeigneter Weise kombiniert, kompensieren sich in erster Ordnung die Einzelfehler so daß das resultierende Signal innerhalb der Messzeit weitgehend driftfrei zur Verfügung steht. Dadurch kann die Integrationszeit verlängert und das Signal/Rauschverhältnis verbessert werden.

Die beiden Messsignale T und S können beispielsweise zu einem gewichteten Summensignal S_{g} kombiniert werden. Wie aus Fig. 3 ersichtlich, weist das gewichtete Summensignal (z.B. Humanblut mit einem tHb von 5g/dl) in einem Messfenster von ca. 20s bis 50s einen konstanten Wert auf, so daß driftfreie Messungen bei mehreren Wellenlängen möglich sind.

Ein weiterer durch diese Anordnung gegebener Vorteil liegt darin, daß man durch entsprechend gewählte Gewichtung der Signale T und S ein Summensignal mit unterschiedlichem Empfindlichkeitsverlauf bezogen auf die zu messende Konzentration erzeugen kann. Diese Eigenschaft läßt sich besonders vorteilhaft bei der Messung von Vollblutproben nützen. Bei Blutproben mit sehr niederem tHb Gehalt (3 < tHb < g/dl) ist eine gesteigerte Messgenauigkeit wünschenswert um die medizinische Entscheidung, ob z.B. dem Patient eine Infusion oder eine Transfusion verabreicht werden soll, sicher treffen zu können. Wie aus Fig. 2 ersichtlich, kann durch die Kombination der Signale der Messbereich zu niedereren Konzentrationen beträchtlich erweitert werden ohne auf das Problem einer zweideutigen Signalinterpretation (Maximum des Streusignals S) zu stoßen.

Ein weiterer Vorteil liegt darin, daß das Transmissionssignal und das Streusignal für eine spezielle Probenart (z.B. Humanblut) in einem definierten Zusammenhang bezüglich Kurvenverlauf stehen. Dadurch ist es möglich Proben anderer Art (z.B. Rinderblut) zu erkennen und zu diskriminieren. Obwohl Human- und Rinderblut ein sehr ähnliches Absorptionsverhalten zeigen, unterscheiden sich diese Proben durch die Größe der roten Blutzellen (= Streuzentren). Dadurch wird der Lichtleitmechanismus in der Streugeometrie im Verhältnis zum Verhalten in der Transmissionsgeometrie so signifikant geändert, daß eine klare Unterscheidung unterschiedlicher Proben möglich ist. Auch andere Störgrößen wie z.B. Farbstoffe, die nicht in der Probe enthalten sein sollten, sind erkennbar, wenn die funktionale Abhängigkeit der beiden Messfunktionen ausreichend verändert ist.

Bei der in Fig. 4 dargestellten, bevorzugten Ausführungsvariante liegt die optische Achse 5' des zweiten Detektors 5 parallel zur Achse 3' der Messstrahlung. Die Ebene ε steht in dieser Darstellung senkrecht auf die Bildebene und fällt mit der Kapillarachse 1' zusammen. Bei dieser Ausführungsvariante ist die Kapillare 1 in einer Bohrung 9 eines Messblockes 10 angeordnet, welcher weiters den Lichtleiter 3 aufnimmt und die Apertur 11 für den Transmissionsdetektor 4 sowie die Apertur 12 für den Streulichtdetektor 5 definiert. Zwischen dem Einkoppelbereich 6 für die Messstrahlung und dem Auskoppelbereich 7 für die Streustrahlung ist ein optisches Trennelement 13 angeordnet, welches den Ringspalt 14 zwischen der Kapillare 1 und der Bohrung 9 abdeckt. Das optische Trennelement 13 kann beispielsweise als O-Ring aus schwarzem Gummi ausgeführt und in einer Nut der Bohrung 9 angeordnet sein. Das Trennelement verhindert wirksam die Einkoppelung von Fehllicht in den Streulichtdetektor 5 und dient gleichzeitig zur Zentrierung der Kapillare 1 in der Bohrung 9. Weiters kann die Kapillare 1 durch Dichtelemente 15 fixiert werden, welche die Kapillare ein- und ausgangsseitig mit Zu- und Abflußleitungen 16 und 17 für das Probenmedium verbinden.

Bei der Ausführungsvariante mit Luftspalt 14 gemäß Fig. 4 kann der Wirkmechanismus dadurch verbessert werden, daß die Bohrung 9 des Messblockes 10 zumindest zwischen dem Einkoppelbereich 6 und dem Auskoppelbereich 7 eine diffus reflektierende Oberfläche 18 aufweist. Es zeigt sich, daß eine derartige Oberflächengestaltung beste Ergebnisse bringt, da keine Vorzugsrichtung für die Rückreflexion in die Probe entsteht, wodurch eine derartige Ausführung unempfindlicher auf lokale Inhomogenitäten reagiert als verspiegelte Oberflächen.

Um einen Leerwert der Messanordnung zu bestimmen, durch welchen Intensitätsänderungen der Messstrahlung und Veränderungen im optischen Weg kompensiert werden können, werden zwei Messungen bei mit Wasser gefüllter Kapillare durchgeführt. Der erste Detektor 4 in Transmissionsgeometrie erfaßt dabei Änderungen der Intensität der Lichtquelle sowie Einkoppelverluste der Messstrahlung beim Eintritt in die Kapillare 1. Die Leerwertmessung beim zweiten Detektor 5 in Streulichtgeometrie gibt zusätzliche Informationen über Veränderungen im Inneren der Messkapillare, beispielweise Verschmutzungen oder Belagsbildungen sowie über den Auskoppelbereich der Kapillare. Beide Leerwertmessungen werden vorzugsweise zeitlich synchron durchgeführt, um Schwankungen der Intensität der Lichtquelle während der Referenzmessung zu kompensieren.

Durch Anpassen der optisch relevanten Parameter wie Kapillardurchmesser, Kapillarwandstärke, Länge der Distanz a zwischen Einkoppelbereich 6 und Auskoppelbereich 7 (Wechselwirkungszone) optische Eigenschaften der Bohrung 9, Apertur der Ein- und Auskoppelgeometrie etc. kann der Verlauf der Messfunktion des Streulichtdetektors 5 an die spezifischen Erfordernisse angepaßt werden. Beispielsweise kann damit die Lage des Maximums bzw. Umkehrpunktes (siehe Fig. 2) so gelegt werden, daß dieses unter der erwarteten Minimalkonzentration der zu vermessenden Probe liegt und damit zweideutige Messergebnisse sicher vermieden werden. Auch die mittlere Steilheit bzw. der Steilheitsverlauf über den interessierten Messbereich kann innerhalb gewisser Grenzen angepaßt und optimiert werden.

Bei der Messung von tHb und SO2 in einer Vollblutprobe weist die Kapillare 1 typischerweise einen Innendurchmesser von ca. 1,1 bis 1,6 mm auf und die Distanz a zwischen dem Einkoppelbereich 6 und dem Auskoppelbereich 7 beträgt ca. 4 bis 10 mm. Der Lichtleiter 3 weist einen Coredurchmesser von ca. 1 mm auf, die Apertur 11 bzw. 12 beträgt ca. 1,5 bis 2,5 mm.

Ein weiterer Vorteil der in Fig. 2 gezeigten Messfunktion bzw. deren Anpassung an die spezifischen Erfordernisse liegt darin, daß die maximale Intensität der Streustrahlung bei einer definierten minimalen Probenkonzentration erreicht wird und der gesamte dynamische Messbereich der Anordnung für den gesamten Konzentrationsbereich genutzt werden kann. Damit ist auch die beste Ausnutzung der durch das Detektionssystem erreichbaren Auflösung gegeben. Dies ist besonders vorteilhaft, wenn das zu messende Medium stark absorbiert, nicht verdünnt werden soll oder aus strömungstechnischen Gründen schwer in eine ausreichend dünne Küvette gefüllt werden kann. Dies trifft vor allem für biologische Flüssigkeit im speziellen für Vollblut zu.

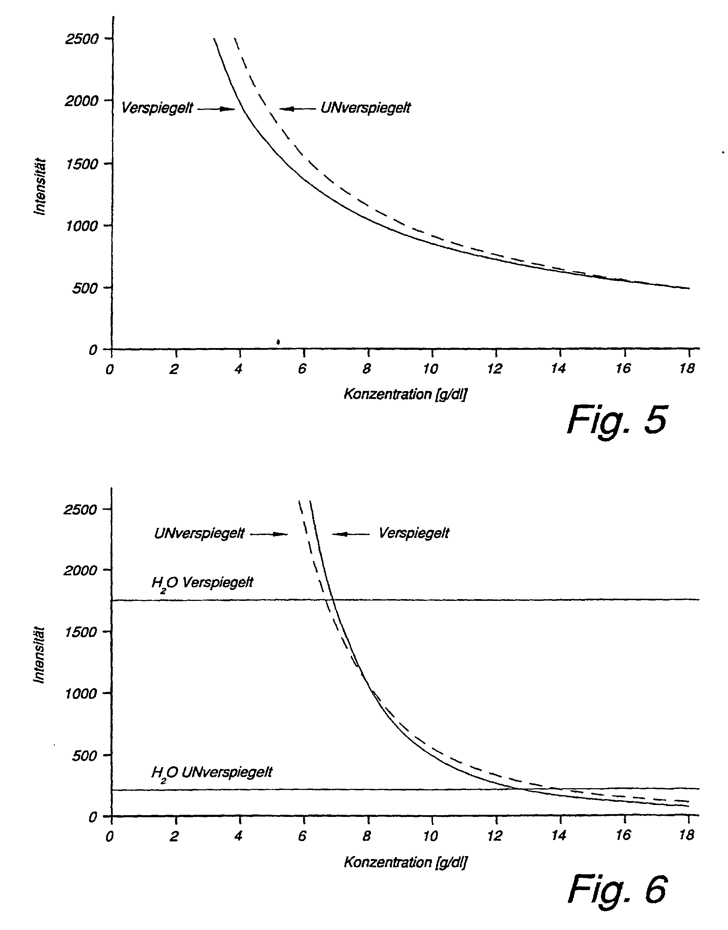

In den Fig. 5 und 6 ist jeweils auf der Ordinate die Intensität und auf der Abszisse die Konzentration in g/dl aufgetragen. Fig. 5 zeigt den Intensitätsverlauf der Transmissionsstrahlung (Detektor 4) für eine Kapillare mit Luftspalt (unverspiegelt) sowie für eine verspiegelte Kapillare. Fig. 6 zeigt den Intensitätsverlauf (verstärkt um den Faktor 100) für den Streulichtdetektor (Detektor 5) für beide Varianten (verspiegelt und unverspiegelt), wobei für beide Varianten auch der Leerwert (H₂O verspiegelt bzw. H₂O unverspiegelt) für eine mit Wasser gefüllte Kapillare eingetragen ist.

## Patentansprüche

1. Optische Messanordnung zur Bestimmung der Transmissions- und der Streustrahlung einer mit einer Messstrahlung beaufschlagten flüssigen Probe, mit
- einer Kapillare (1) zur Aufnahme der flüssigen Probe,
- einer Lichtquelle (2) zur Emission der Messstrahlung im Wesentlichen senkrecht auf die Längsachse (1') der Kapillare (1),
- einem ersten Detektor (4) zur Erfassung der Transmissionsstrahlung, welcher im Bereich der Achse (3') der Messstrahlung angeordnet ist,
- sowie einem in Richtung der Längsachse (1') der Kapillare (1) mit einem Abstand (a) vom ersten Detektor (4) angeordneten zweiten Detektor (5) zur Erfassung der Streustrahlung, wobei der erste Detektor (4) und der zweite Detektor (5) auf unterschiedlichen Seiten einer Ebene (ε) liegen, welche die Längsachse (1') der Kapillare (1) enthält und auf die Achse (3') der Messstrahlung senkrecht steht,
**dadurch gekennzeichnet, dass** die Anordnung einen Messblock (10) mit einer Bohrung (9) zur Aufnahme der Kapillare (1) umfasst und dass zwischen einem Einkoppelbereich (6) für die Messstrahlung und einem Auskoppelbereich (7) für die Streustrahlung zumindest ein optisches Trennelement (13) vorgesehen ist, welches einen Ringspalt (14) zwischen der Kapillare (1) und der Bohrung (9) abdeckt.

2. Messanordnung nach Anspruch 1, **dadurch gekennzeichnet, dass** die optische Achse (5') des zweiten Detektors (5) zur Achse (3') der Messstrahlung im Wesentlichen parallel ausgerichtet ist.

3. Messanordnung nach Anspruch 1 oder 2, **dadurch gekennzeichnet, dass** das optische Trennelement (13) als O-Ring oder Quadring ausgeführt ist, welcher die Kapillare (1) in der Bohrung (9) des Messblockes (10) zentriert.

4. Messanordnung nach einem der Ansprüche 1 bis 3, **dadurch gekennzeichnet, dass** die Bohrung (9) des Messblockes (10) zumindest zwischen dem Einkoppelbereich (6) für die Messstrahlung und dem Auskoppelbereich (7) für die Streustrahlung eine diffus reflektierende Oberfläche (18) aufweist.

5. Messanordnung nach einem der Ansprüche 1 bis 3, **dadurch gekennzeichnet, dass** die Außenwand der Kapillare (1) mit Ausnahme des Einkoppelbereiches (6) für die Messstrahlung und des Auskoppelbereiches (7) für die Streustrahlung verspiegelt ist, oder eine dichroitische Beschichtung (8) aufweist.

## Claims

1. An optical measurement system for determination of the transmitted and scattered radiation in a liquid sample subject to measurement radiation, comprising
- a capillary (1) for containing the liquid sample,
- a lightsource (2) for emission of the measurement radiation essentially at a right angle with the longitudinal axis (1') of the capillary (1),
- a first detector (4) for picking up the transmitted radiation, which is positioned near the axis (3') of the beam of measurement radiation,
- a second detector (5) for picking up scattered radiation, which is placed at a distance (a) from the first detector (4) in the direction of the longitudinal axis (1') of the capillary (1), the first detector (4) and the second detector (5) being positioned on different sides of a plane (ε), which contains the longitudinal axis (1') of the capillary (1) and is at a right angle with the axis (3') of the measurement radiation,
**characterized in that** the system includes a measurement block (10) with a bore (9) receiving the capillary, and that at least one optical separating element (13) is provided between an input region (6) of the measurement radiation and an output region (7) of the scattered radiation, which optical separating element (13) covers an annular gap (14) between the capillary (1) and the wall of the bore (9).

2. A measurement system according to claim 1, **characterized in that** the optical axis (5') of the second detector (5) is essentially parallel to the axis (3') of the measurement radiation.

3. A measurement system according to claim 1 or 2, **characterized in that** the optical separating element (13) is configured as an O-ring or as a ring with square cross-section, which will center the capillary (1) in the bore (9) of the measurement block (10).

4. A measurement system according to any of claims 1 to 3, **characterized in that** the bore (9) of the measurement block (10) has a diffusely reflecting surface (18) at least between the input region (6) of the measurement radiation and the output region (7) of the scattered radiation.

5. A measurement system according to any of claims 1 to 3, **characterized in that** the exterior wall of the capillary (1), except for the input region (6) of the measurement radiation and the output region (7) of the scattered radiation, is mirror-coated or coated with a dichroic layer (8).

## Revendications

1. Dispositif de mesure optique pour déterminer le rayonnement transmis et le rayonnement diffusé par un échantillon liquide exposé à un rayonnement de mesure, avec :
- un capillaire (1) pour recevoir l'échantillon liquide,
- une source de lumière (2) pour émettre le rayonnement de mesure sensiblement perpendiculairement par rapport à l'axe longitudinal (1') du capillaire (1),
- un premier détecteur (4) pour recevoir le rayonnement transmis, qui est disposé dans la région de l'axe (3') du rayonnement de mesure,
- ainsi qu'un second détecteur (5) pour recevoir le rayonnement diffusé, disposé à une certaine distance (a) du premier détecteur (4) suivant la direction de l'axe longitudinal (1') du capillaire (1), le premier détecteur (4) et le second détecteur (5) se trouvant sur des côtés différents d'un plan (ε) qui contient l'axe longitudinal (1') du capillaire (1) et qui est perpendiculaire à l'axe (3') du rayonnement de mesure,
**caractérisé en ce que** le dispositif comprend un bloc de mesure (10) avec un alésage (9) pour loger le capillaire (1) et **en ce qu'**entre une région d'arrivée (6) du rayonnement de mesure et une région de sortie (7) du rayonnement diffusé, on prévoit au moins un élément de séparation optique (13) dans un espacement annulaire (14) entre le capillaire (1) et l'alésage (9).

2. Dispositif de mesure selon la revendication 1, **caractérisé en ce que** l'axe optique (5') du second détecteur (5) est sensiblement parallèle à l'axe (3') du rayonnement de mesure.

3. Dispositif de mesure selon la revendication 1 ou la revendication 2, **caractérisé en ce que** l'élément de séparation optique (13) est un joint torique ou un joint d'étanchéité à quatre lobes qui assure le centrage du capillaire (1) dans l'alésage (9) du bloc de mesure (10).

4. Dispositif de mesure selon l'une des revendications 1 à 3, **caractérisé en ce que** l'alésage (9) du bloc de mesure (10) présente une surface à réflexion diffuse (18) entre au moins la région d'arrivée (6) du rayonnement de mesure et la région de sortie (7) du rayonnement diffusé.

5. Dispositif de mesure selon l'une des revendications 1 à 3, **caractérisé en ce que** la paroi externe du capillaire (1) - à l'exception de la région d'arrivée (6) du rayonnement de mesure et de la région de sortie (7) du rayonnement diffusé - est métallisée ou comporte un revêtement dichroïque (8).
